(19) **Europäisches Patentamt / European Patent Office / Office européen des brevets**

(11) **EP 2 362 396 B1**

(12) **EUROPEAN PATENT SPECIFICATION**

(45) Date of publication and mention
of the grant of the patent:
**04.06.2014 Bulletin 2014/23**

(51) Int Cl.:
*G11B 27/10* (2006.01)     *G06K 9/00* (2006.01)
*G11B 27/22* (2006.01)

(21) Application number: **11155974.6**

(22) Date of filing: **25.02.2011**

(54) **Video scene segmentation and classification to skip advertisements.**

Segmentierung und Klassifizierung eines Videos zum weglassen von Werbeinhalten.

Segmentation et classification de scènes video pour élimination de la publicité.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2010 US 713833**

(43) Date of publication of application:
**31.08.2011 Bulletin 2011/35**

(60) Divisional application:
**14163781.9**

(73) Proprietor: **Comcast Cable Communications, LLC Philadelphia, PA 19103 (US)**

(72) Inventors:
- **Tzoukermann, Evelyne**
  **Philadelphia, PA 19103 (US)**
- **Zhou, Hongzhong**
  **Philadelphia, PA 19103 (US)**
- **Jojic, Oliver**
  **Philadelphia, PA 19103 (US)**
- **Shevade, Bageshree**
  **Philadelphia, PA 19103 (US)**
- **Farrell, Ryan Matthew**
  **Philadelphia, PA 19103 (US)**

(74) Representative: **Chew, Kwan Chong Daniel et al Withers & Rogers LLP**
**4 More London Riverside**
**London SE1 2AU (GB)**

(56) References cited:
**WO-A1-02/052440    DE-A1-102005 033 795**

- **CERNEKOVA, NIKOU, PITAS, DEPARTMENT OF INFORMATICS ARISTOTLE UNIVERSITY OF THESSALONIKI: "Entropy Metrics used for Video Summarization", SCCG 02: PROCEEDINGS OF THE 18TH SPRING CONFERENCE ON COMPUTER GRAPHICS, [Online] - 1 April 2002 (2002-04-01), pages 73-82, XP040140793, Budmeric, Slovakia ACM Retrieved from the Internet: URL:http://delivery.acm.org/ 10.1145/590000 /584471/p73-cernekova.pdf? key1=584471&key2 =8322136031&coll=DL&dl=ACM&ip=145.64.134. 2 41&CFID=25250622&CFTOKEN=60194546> [retrieved on 2011-05-25]**
- **MARIOS KYPEROUNTAS ET AL: "Enhanced Eigen-Audioframes for Audiovisual Scene Change Detection", IEEE TRANSACTIONS ON MULTIMEDIA, IEEE SERVICE CENTER, PISCATAWAY, NJ, US, vol. 9, no. 4, 1 June 2007 (2007-06-01), pages 785-797, XP011181502, ISSN: 1520-9210, DOI: DOI:10.1109/TMM.2007.893337**
- **CERNEKOVA Z ET AL: "Shot detection in video sequences using entropy-based metrics", INTERNATIONAL CONFERENCE ON IMAGE PROCESSING (ICIP),, vol. 3, 22 September 2002 (2002-09-22), pages 421-424, XP010607744, ISBN: 978-0-7803-7622-9**
- **GANESH RATTINASSABABADY (KRDL) ET AL: "Union Color Histogram Descriptor for Multiple Frame / Picture Color Characteriza", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M5702, 7 March 2000 (2000-03-07), XP030034880,**

- PIRO P ET AL: "Image retrieval via Kullback-Leibler divergence of patches of multiscale coefficients in the KNN framework", CONTENT-BASED MULTIMEDIA INDEXING, 2008. CBMI 2008. INTERNATIONAL WORKSHOP ON, IEEE, PISCATAWAY, NJ, USA, 18 June 2008 (2008-06-18), pages 230-235, XP031286369, ISBN: 978-1-4244-2043-8
- YAO WANG ET AL: "Multimedia Content Analysis - Using Both Audio and Visual Clues", IEEE SIGNAL PROCESSING MAGAZINE, IEEE SERVICE CENTER, PISCATAWAY, NJ, US, vol. 17, no. 6, 1 November 2000 (2000-11-01), pages 12-36, XP011089877, ISSN: 1053-5888, DOI: 10.1109/79.888862
- DAILIANAS A ET AL: "COMPARISON OF AUTOMATIC VIDEO SEGMENTATION ALGORITHMS", PROCEEDINGS OF SPIE, SPIE, US, vol. 2615, 1 January 1976 (1976-01-01), pages 2-16, XP002917937, ISSN: 0277-786X, DOI: 10.1117/12.229193 Retrieved from the Internet: URL:http://citeseerx.ist.psu.edu/viewdoc/summary?doi=10.1.1.44.3212>

**Description**

TECHNICAL FIELD

Aspects of the disclosure relate to processing linear content streams. In particular, one or more aspects relate to the identification of segments in a linear transmission and the utilization of such information.

BACKGROUND

The increased popularity of video recording devices and video-on-demand has motivated television programming providers to expand the capabilities and functionality of recording devices while increasing video-on-demand offerings. One of the attractions of video recording devices and video-on-demand is the ability for a subscriber to move past commercials, thereby viewing desired content in one continuous segment, rather than in a series of segments separated by advertisements. However, video recording devices are often configured to record a specific time frame. Accordingly, if a program runs long, the device might not record the entire program. Alternatively, if a program is shorter than the allotted time frame, the device may waste recording space with other programming.

Video-on-demand provides programming that is generally commercial free. However, video-on-demand typically requires a service provider to purchase a program without commercials or to create a commercial free version of the program by segmenting a video feed. With the vast number of considerations in segmenting video streams, such a process is often performed using manual judgment and determinations. For example, a service provider employee may view a video stream and manually identify commercial start times and end times within a video stream. Additionally or alternatively, the service provider employee may identify the beginning and end of different programs.

YAO WANG ET AL: "Multimedia Content Analysis - Using Both Audio and Visual Clues", IEEE SIGNAL PROCESSING MAGAZINE, IEEE SERVICE CENTER, PISCATAWAY, NJ, US, vol. 17, no. 6, 1 November 2000 (2000-11-01), pages 12-36, ISSN: 1053-5888 defines a method comprising receiving, at a processing device, a content stream from a content source, the content stream having a plurality of content items of a first type and a second type; detecting a transition in the content stream using image analysis of one or more frames in the content stream; segmenting, by the processing device, the content stream into a plurality of segments based on the detected transition; and categorizing the plurality of segments into content of the first type and content of the second type.

WO02/052440 defines that an Electronic Program Guide is improper to classify commercials because too imprecise.

DAILIANAS A ET AL: "COMPARISON OF AUTOMATIC VIDEO SEGMENTATION ALGORITHMS", PROCEEDINGS OF SPIE, SPIE, US, vol. 2615, 1 January 1976 (1976-01-01), pages 2-16, XP002917937, ISSN: 0277-786X defines choosing the best segmentation algorithm depending on the type of video (news, sport, ...).

BRIEF SUMMARY

The invention is as defined by the appended claims.

BRIEF DESCRIPTION OF THE DRAWINGS

The present disclosure is illustrated by way of example and not limited in the accompanying figures in which like reference numerals indicate similar elements and in which:

FIG. 1 illustrates an example network environment in which content items may be distributed to subscribing clients.

FIG. 2 illustrates an example segmentation process executed by a video processing system according to one or more aspects described herein.

FIG. 3 is a flowchart illustrating a method for automatically segmenting a linear content stream into multiple programs or content items according to one or more aspects described herein.

FIG. 4 is a graph illustrating relative entropy levels within a content stream according to one or more aspects described herein.

FIG. 5A illustrates a KL divergence matrix for a video segment according to one or more aspects described herein.

FIG. 5B illustrates a joint entropy matrix for a video segment according to one or more aspects described herein.

FIG. 6 is a flowchart illustrating a method for detecting audio duplicates in an audio stream according to one or more aspects described herein.

FIGS. 7A-7C are graphs illustrating matches between a query audio energy and audio energies of other segments in the content stream according to one or more aspects described herein.

FIG. 8 is flowchart illustrating a method for detecting static logos within a content stream according to one or more aspects described herein.

FIG. 9 is a flowchart illustrating a method for detecting dynamic logos within a content stream according to one or more aspects described herein.

FIG. 10 is a flowchart illustrating a method for automatically extending recording times for recording a program according to one or more aspects described herein.

DETAILED DESCRIPTION

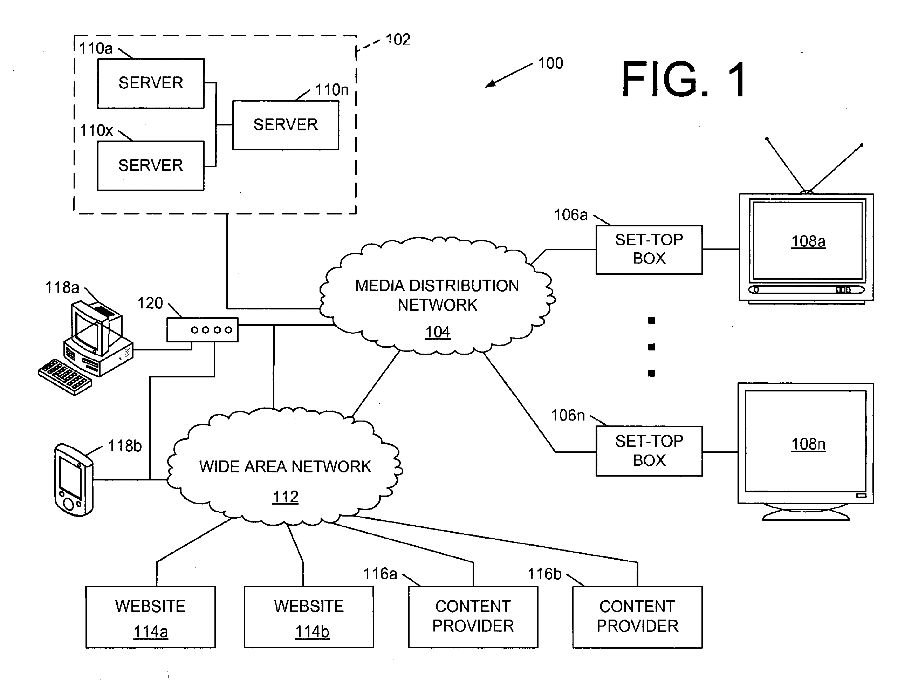

FIG. 1 illustrates a content distribution system 100 that may be used in connection with one or more aspects described herein. The distribution system 100 may include a headend 102, a media distribution network 104, set top boxes (STBs) 106a-106n and corresponding receiving devices (i.e., receiver, transceiver, etc.) 108a-108n. STBs 106a-106n may include a general computing device that is configured to receive television programming over one or more channels. Alternatively, the media distribution network 104 may be connected directly to devices 108a-108n. The distribution system 100 may be used as a media service provider/subscriber system wherein the provider (or vendor) generally operates the headend 102 and the media distribution network 104 and also provides a subscriber (i.e., client, customer, service purchaser, user, etc.) with the STBs 106a-106n. Network 104 may comprise a network such as a hybrid fiber optic coax network, a fiber optic network, a wireless network, a network that combines one or more of the foregoing networks, or another type of network that is dedicated to the distribution of content by the service provider and other services provided by the service provider. Accordingly, network 104 is generally not publicly accessible, rather network 104 might only be accessible by users or subscribers of the service provider.

The STB 106a is generally placed at a subscriber location such as a subscriber's home, a tavern, a hotel room, a business, etc., and the receiving device 108a is generally provided by the subscribing client. As noted above, although the disclosure may refer to STBs 106a-106n, aspects described herein may be implemented without STBs, for example, with devices 108a-108n being connected to network 104 and performing necessary functions. Receiving device 108a may include a television, high definition television (HDTV), monitor, host viewing device, MP3 player, audio receiver, radio, communication device, personal computer, media player, digital video recorder, game playing device, etc. The device 108a may be implemented as a transceiver having interactive capability in connection with the STB 106a, the headend 102 or both the STB 106a and the headend 102. The headend 102 may include a plurality of devices 110 (e.g., devices 110a-110n) such as data servers, computers, processors, security encryption and decryption apparatuses or systems, and the like.

In one or more embodiments, network 104 may further provide devices 106a-106n and 118a-118b with data access to a publicly accessible wide area network (WAN) 112 such as the Internet. In one example, a service provider may allow a subscriber to access websites 114a and 114b and content providers 116a and 116b connected to the Internet (i.e., WAN 112) using their corresponding STB 106a. In another example, a service provider (e.g., a media provider) may supplement or customize media data sent to a subscriber's STB 106a using data from the WAN 112. To access the WAN 112 using computing devices 118a-118b (rather than a STB 106a), a user may be provided with a user device such as a cable modem 120 that is configured to process data carried through radio frequency (RF) channels on the cable television infrastructure (e.g., network 104) into IP data packets.

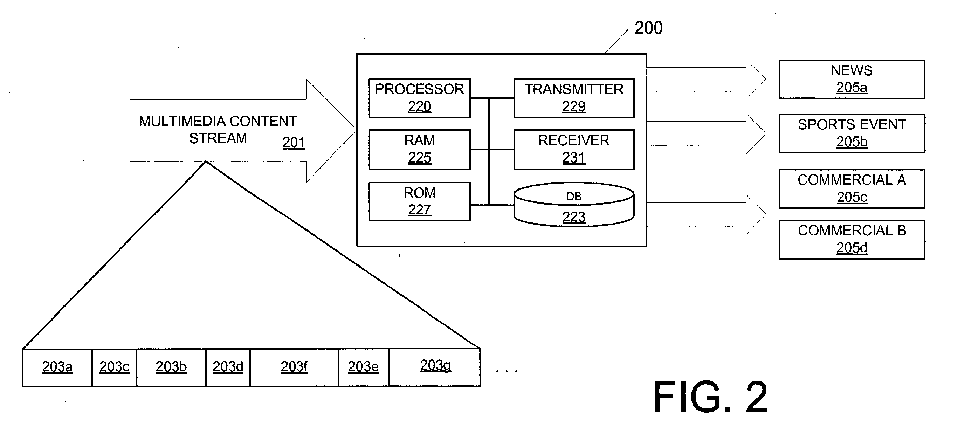

FIG. 2 illustrates a live video stream that may be received from a content provider (e.g., a television broadcast company, a movie studio, etc.) at a service provider server 200. Linear multimedia content stream 201 may include a plurality of programming segments 203a-203g. Each segment may correspond to a particular program or content item including movies, commercials, television shows such as sporting events and news reports, public service announcements and the like. In exemplary multimedia content stream 201, segments 203a and 203b correspond to news 205a, segments 203c, 203d and 203e comprise commercial programming and segments 203f and 203g correspond to a sporting event 205b. Segments 203c, 203d and 203e may correspond to the same commercial 205c repeated over time or may comprise multiple different commercials (e.g., 205c and 205d).

In one or more arrangements, server 200 is configured to automatically segment multimedia content stream 201 into news report 205a, sporting event 205b and commercials 205c and 205d, for example, by automatically identifying the start and end points of the particular content. Segmentation may include processing audio information and analyzing image information including hue, saturation, or color values as described in further detail herein. By segmenting the various content items 205a-205d, server 200 may automatically combine segments 203 to form content items 205a-205d. Content items 205a-205d may further be stored as individual assets within a database, such as video-on-demand database 223, and offered to subscribers. Alternatively or additionally, server 200 may be configured to notify a user device which may be a user-owned device or a device provided by the service provider of the start and end times of particular content items 205a-205d. In particular, server 200 may notify a user device of the start and end times of commercials 205c and 205d so that a viewer may skip over commercials 205c and 205d without having to manually identify when the commercials start and end. For example, upon reaching commercial 205d in stream 201, a viewer may select a skip function on a user device. In response, the user device may then skip automatically to the determined end time of commercial 205d. Still further, server 200 may transmit determined start and end times of television programming such as sporting event 205b or news report 205a to a user device to provide more precise programming information. For example, if sporting event 205b is originally scheduled to broadcast between 12:00 PM and 3:00 PM, but instead runs longer, e.g., until 3:12 PM, server 200 may notify the user device of the overrun. For example, overruns may be detected by determining whether an end of program indicator such as a production company animation has been detected as described in further detail below. Similarly, if television show 205a is scheduled between 7:30 PM and 8:00 PM, but only runs until 7:58 PM with 2 minutes of commercial between 7:58 PM and 8:00 PM, server 200 may be configured to recognize and notify a user device that the television show ends at 7:58 PM instead of 8:00 PM. The precision of the determination of the server 200 may correspond to minutes, second, milliseconds or the like.

Server 200 may include various computing components including processor 220, database 223, RAM 225, ROM 227, transmitter 229 and receiver 231 to provide automatic program segmentation functionality. For example, processor 220 may be used to perform mathematical functions and execute instructions stored in RAM 225 or ROM 227. Processor 220 may include a single processor, multiple processing cores or multiple processors. For example, processor 220 may include a central processing unit (CPU) in addition to a graphics processing unit (GPU). The separate graphics processing unit may be used to aid image analysis operations and the like. In addition to video-on-demand assets, database 223 may store content metadata, subscriber information, network configuration information, content provider information and the like. Transmitter 229 and receiver 231 may be configured to transmit content and receive content, respectively. For example, transmitter 229 may be configured to transmit content data to subscribers in a media distribution network (e.g., network 104 of FIG. 1) and receiver 231 may be configured to receive content from broadcast sources such as television broadcasters.

According to one or more arrangements, the program segmentation processes and functionality may be performed by individual user devices such as STBs 106a-106n of FIG. 1. For example, the user device may be configured to receive a video stream from server 200 and to segment the programs for commercial-free storage. The user device may further identify more precise start and end times of program segments 203a-203g and/or entire content items 205a-205d to automatically adjust recording times, if necessary. In one example, a viewer may schedule the recording of a movie between the hours of 3 PM and 5 PM based on start and end times advertised in a predefined electronic service guide. If, however, due to various circumstances such as an overrun of a previous program, the movie actually broadcasts between 3:10 PM and 5:10 PM, the user device may automatically adjust the recording times appropriately. According to one aspect, the user device may begin recording at 3 PM, but upon determining that the program did not start until 3:10 PM, the recorded portion between 3 PM and 3:10 PM may be deleted. To provide such functionality, the user device may include computing components similar to those described with respect to server 200.

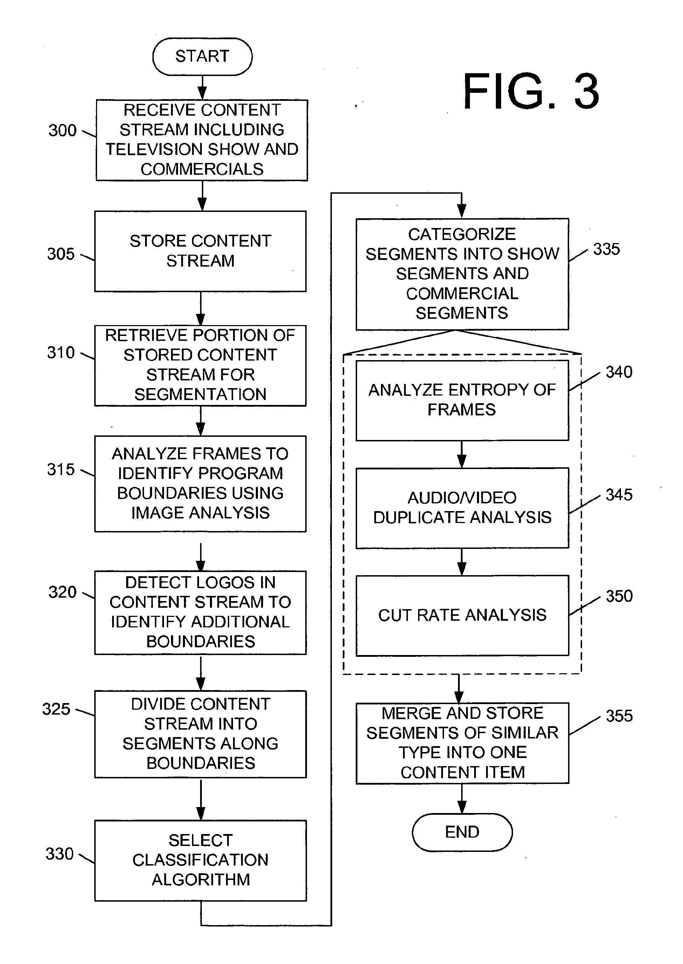

FIG. 3 illustrates a method for automatically segmenting programs in a video stream for storage as one or more individually accessible and distinct content items. For example, the method may be performed by either a service provider server, such as server 200 in FIG. 2 or a user device such as STB 106a of FIG. 1, to separate out portions of a television show transmission and commercials included therebetween. In step 300, a video processing device may receive a content stream including a television show and commercials between portions of the show from a service or content provider. The content stream may be accompanied by or include electronic service guide information identifying channels, program titles, scheduled program start and end times and other types of content metadata. In step 305, the video processing device may store the content stream. The video processing device may subsequently retrieve a portion of the stored content stream for segmentation analysis in step 310. The size of the analyzed portion may vary depending on the capacity and capabilities of the processing device, user preferences, service provider preferences and/or combinations thereof. In one or more arrangements, the amount of content retrieved may be based on a predefined program schedule. For example, if a show is scheduled for broadcasting between 10:30 AM and 11 AM, the content stream for that portion of time may be retrieved.

In step 315, the video processing device may analyze frames of the content stream to identify program boundaries within the stream using a transition in the content stream. A transition may be identified, for example, using black frame, cut and fade detection algorithms, for example. Black frames are generally inserted between programs to signify the transition from one to the other. Cuts and fades may also be indicative of a transition from one program to another (e.g., from a television show to a commercial). A cut may include an immediate change or switch between a frame of a first content item and a frame of a second content item. A fade, on the other hand, may include a slower transition between the first content item frame and the second content item frame where the frames may be blended together to provide a more gradual transition. Alternatively or additionally, a fade may include blending a black frame or a frame of another color with one or more of the content frames. Image analysis techniques for identifying black frames, cuts and fades may include measuring frame entropy, pairwise joint entropy (e.g., entropy between two frames), pairwise Kullback-Liebler (KL) divergence, Mahalanobis distance and the like. Entropy may include a measure of dissimilarity or disorder of a particular attribute such as hue, saturation, red, green or blue values within a frame or between two frames. Entropy may be used to express the amount of uncertainty that exists for a variable within a system (e.g., one or more frames of video or audio). Accordingly, if a video frame is entirely black, the entropy may be low since there is little to no uncertainty as to the color value in that frame. In contrast, a colorful image having many different colors may have higher entropy as the uncertainty of the color value in such a frame is higher. In one example, entropy for a frame is calculated according to the following formula:

$$H(X) = -\sum_{i=1}^{n} p(x_i) \log_2 p(x_i)$$

where H represents entropy, X represents the variable or parameter for which entropy is to be measured and having a range of possible values $\{x_1, ..., x_n\}$, n represents the number of possible values for X, and $p(x_i)$ represents the probability of X being equal to $x_i$. Pairwise joint entropy may be calculated according to the above equation using the collective values and probabilities over two frames, rather than a single frame.

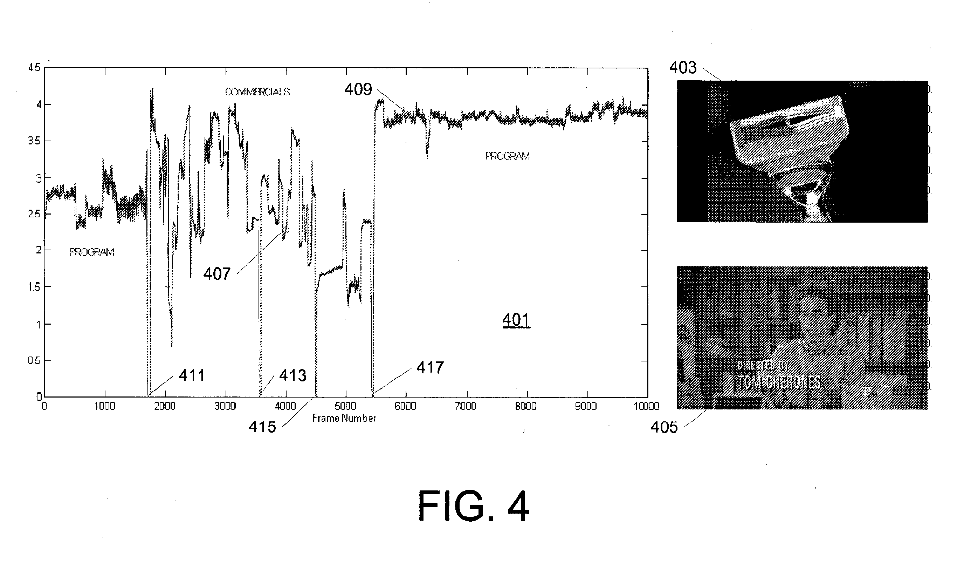

FIG. 4 illustrates a graph 401 of entropies for a video stream comprising a commercial frame 403 and a television show frame 405. In one or more arrangements, commercial frame 403 and television show frame 405 may include any type of video programming including sporting event programming, movies, dramas, situation comedies, talk shows, commercials, news programming, special event programming, paid advertising, game shows and the like. Because, in this example, commercial frame 403 is predominantly black with small areas of color as compared with television show frame 405, the entropy value 407 of commercial frame 403 is lower than the entropy value 409 of show frame 405. Extremely low values of entropy (e.g., near zero), may be identified as black frames. Thus, frames corresponding to entropy values 411, 413, 415 and 417 may be identified as black frames in the video stream and suggest a program boundary.

Cuts may be detected by determining an amount of mutual information between two consecutive frames. Because cuts generally involve the abrupt switch from one scene to another, the mutual information for frames having a cut between them is typically very low (e.g., near zero). Accordingly, cuts may be identified at points in the video stream where the amount of mutual information is near zero or below a specified threshold. Fades, on the other hand, may be detected using joint entropy, which measures the amount of information carried between frames. A fade-out, for instance, may be detected by identifying a local minimum and determining a point where the joint entropy begins a gradual decrease to the local minimum. A fade-in, on the other hand, may be detected by identifying gradual increases. In one or more arrangements, fades and cuts may be identified according to techniques, algorithms and methodologies as described in Cernekova, Z. *et al.*, "Shot Detection in Video Sequences Using Entropy-based Metrics," Proceedings of the 2002 IEEE International Conference in Image Processing, 2002.

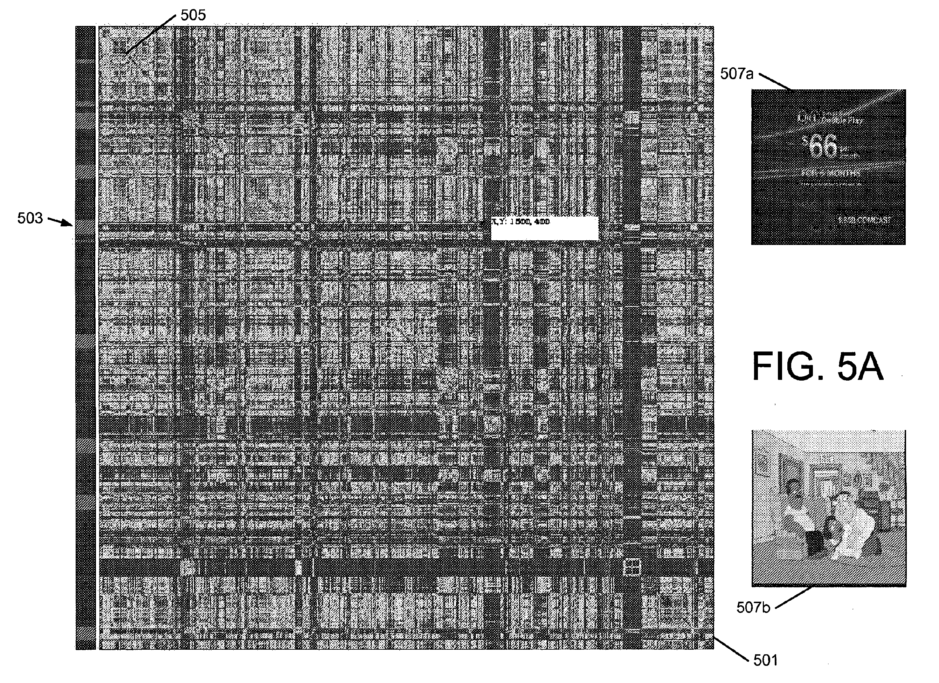

FIG. 5A illustrates a KL divergence matrix 501 that illustrates the KL divergence for each pair of video frames in a video segment that may comprise a commercial and a television show. In one or more arrangements, the KL divergence may be color coded to indicate a degree of divergence. For example, red may indicate a higher level of KL divergence while blue may indicate low levels of divergence. Alternatively or additionally, other colors, patterns or the like may be used to depict whether a divergence value is above or below a specified threshold. That is, red may be used for all divergence values above a specified threshold while blue may be used for all divergence values below the threshold. The X and Y axes represent the video frames in the video segment. Accordingly, a line of symmetry 505 represents each frame's divergence with itself (i.e., low to no divergence).

In order to identify cuts, black frames or other transitions in a video program, a ground truth or example frame or set of frames may be identified. This identification may be performed manually for example. Once the ground truth has been determined, a system may automatically identify other transitions or cuts based thereon. In one or more arrangements, the ground truth may be identified once prior to evaluating video segments and subsequently used to classify multiple program streams. That is, the ground truth might not be evaluated every time cuts, black frames or other transitions are to be identified. Instead, a previously generated ground truth may be applied.

In FIG. 5A, ground truth 503 corresponds to a frame 507a where a transition occurs in the video segment. As illustrated, the comparison of frame 507a with the other frames (such as frame 507b) in the video segment reveals a high level of divergence. This may indicate that frame 507a is substantially different in color, hue, saturation or the like from a significant portion of the video being analyzed. Since content items such as a television show may occupy more of the video segment than a commercial frame 507a, the fact that frame 507a has a high level of divergence with a majority of the frames in the video segment may be indicate that frame 507a is not part of the television show and is instead a commercial frame, a black frame, a transition frame or the like. Accordingly, a transition such as a cut or black frame may be identified between frames 507a and a previous or subsequent frame such as show frame 507b.

Various characteristics such as divergence, entropy and the like, that are indicative of a transition may be learned from a ground truth frame or video segment. Those characteristics may then be used to analyze a query frame to determine if the query frame includes such characteristics. If so, the query frame may be identified as a transition frame in the program or video segment.

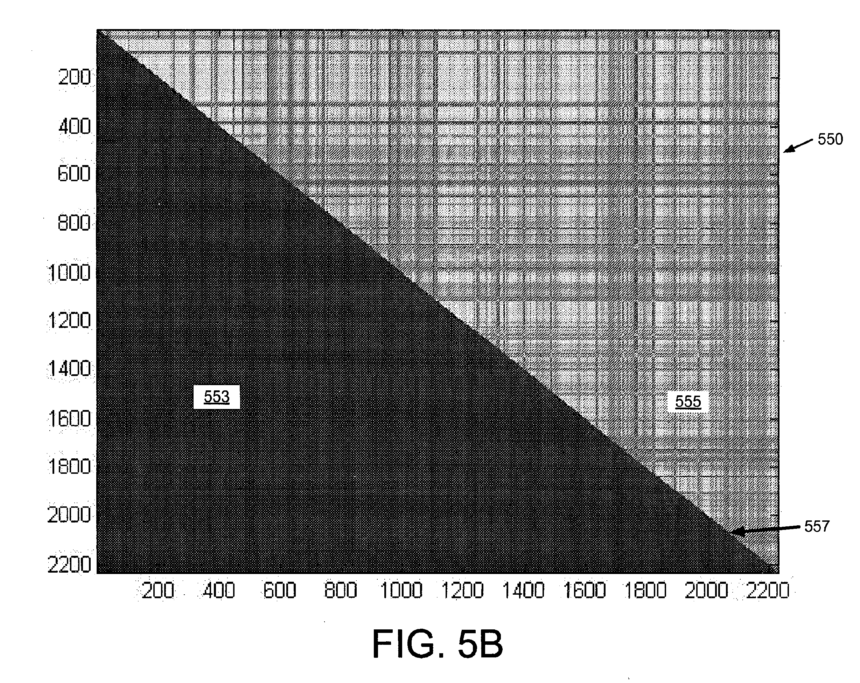

FIG. 5B illustrates a partial joint pairwise entropy matrix for a video segment using a 256 bin histogram on the color red. Portion 553 of matrix 550 is not shown for simplification as portion 553 would correspond to a mirror image of portion 555 about symmetry line 557. Similar to divergence matrix 501, the level of entropy between video frames may be represented by different colors or appearances. In the illustrated example, the darker color indicates a high level of entropy while the lighter color or appearance corresponds to a low level of entropy. A high level of entropy may indicate a transition in the video segment, for example, between one type of programming (e.g., sporting event) and another (e.g., a commercial).

Referring again to FIG. 3, in step 320, the video processing device may detect logos in the content stream to identify additional content boundaries not identified from the cut and fade detection algorithms. In particular, a transition from a television show to a commercial and vice versa may exist where certain logos appear or disappear. For example, television shows may include a visual station identifier in a predefined location throughout a majority of the program whereas commercials do not. When the video stream transitions from the television show to a commercial, the station logo may disappear. Logos may further include, for example, a sports scoreboard, an event logo (e.g., Olympic rings) and the like. Other forms of transitions or transition indicators may be used in addition or as an alternative to logos, cuts and fades. For example, a transition may comprise particular audio content. In one or more arrangements, the transition indicators used may include content that is rendered to be perceivable by the viewer or audience.

In step 325, the video processing device may divide (or segment) the content stream into segments along the boundaries detected in steps 315 and 320. Once the video portion has been segmented, the segments may be classified to separate television show segments from commercial segments. Accordingly, in step 330, the video processing device may select a segment classification algorithm based on an expected type of programming in the analyzed portion of video. The type of programming may be determined based on an electronic service guide (ESG). If the ESG indicates that the retrieved portion of content corresponds to a firs type of television show (e.g., news), for example, a first type of classification algorithm may be used. If, however, the ESG information indicates that the retrieved portion of content corresponds to a second type of television show (e.g., a sporting event), a second type of classification algorithm may be selected. Different classification algorithms may use or place emphasis on different parameters or variables. For example, content duplicates might not be used or as strongly weighted when differentiating between sporting events and commercials since sporting events may include extended portions of video displaying a sporting environment such as a football field that may be identified as being duplicates or substantially similar. Instead, an image analysis technique for detecting logos may be given more weight in such scenarios since sporting events typically include a stable scoreboard element while commercials and/or news reports or other types of television shows generally do not. Thus, the existence or lack of a scoreboard element may be a relatively strong differentiator. Classification algorithms and techniques may also include support vector machines (SVMs), Kernel Density Estimation (KDE, a.k.a Parzen Windows), likelihood rations and/or heuristic classifiers.

In step 335, the device may categorize the segments into show segments and commercial segments using the selected classification algorithm. The selected algorithm for classifying television show segments and commercial segments may include analyzing one or more visual and/or audio characteristics of the segments. For example, the algorithm may include analyzing the determined entropy of the frames within each segment (step 340), audio and video duplicate analysis (step 345) and cut rate analysis (step 350). For example, higher entropy may be indicative of television shows while lower entropy may be indicative of commercials, as discussed above with respect to FIG. 4. Baseline entropy levels for commercials versus television shows may be established through empiric analysis. Video and audio duplicates within a segment may also be indicative of commercials as commercials tend to have repeating images and/or audio (e.g., repeating the products name or a slogan). Accordingly, if a portion of video or audio appears to repeat within a segment greater than a predefined number of times, the segment may be classified as a commercial. Additionally, commercials tend to be replayed frequently within a short period of time. Thus, if multiple segments include the same or substantially similar audio or video, the video processing device may classify the multiple segments as commercials and, in some instances, the same commercial.

The number of segments with duplicate audio or video may be compared to a threshold number of segments so that similar portions of video or audio within a television show are not mistakenly categorized as commercials. The use of a threshold follows the assumption that commercials will tend to repeat more often than scenes within a television show. Additionally or alternatively, the number and/or frequency of cuts may be indicative of a programming type. For example, commercials may include a higher frequency of cuts than television shows such as sports programming. Accordingly, the cut rate may be indicative of the type of content in the segment.

In step 355, the segments classified as the same or similar type (e.g., show segments) may be merged and stored together into a single video according to the sequence in which the segments were received. For example, the video may be stored in an on-demand database and made accessible to subscribers. Optionally, the commercial segments may be discarded or stored depending on user or service provider preferences and storage capacity.

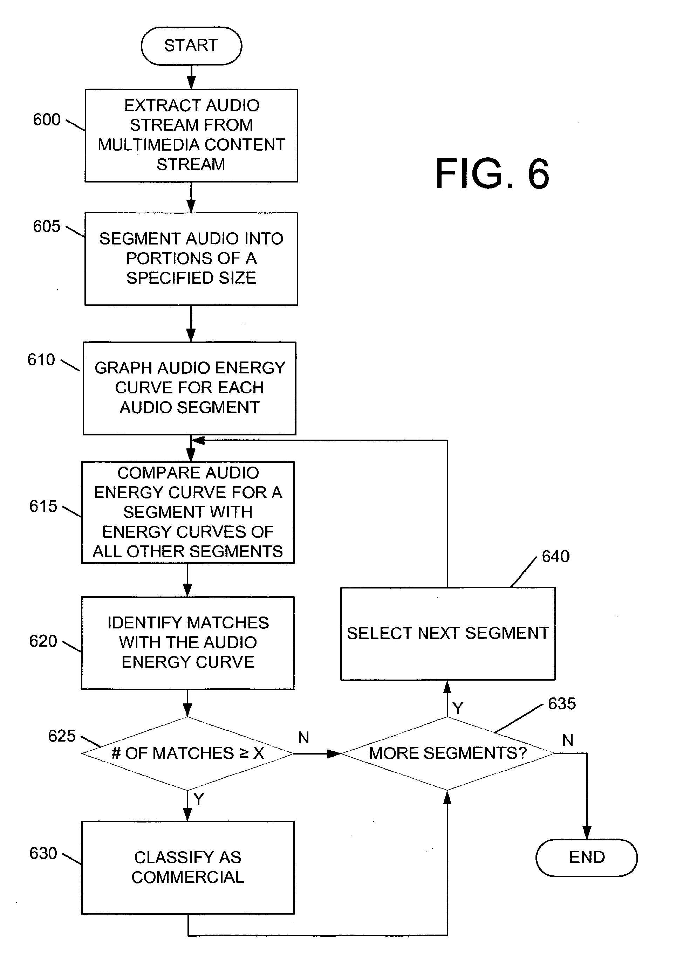

FIG. 6 illustrates a method for audio duplicate detection. In step 600, an audio stream may be extracted from a multimedia content stream. Audio and video streams may be multiplexed together to form a transport stream for delivery to a receiving device. Thus, upon receipt, the audio and video streams may be extracted or demultiplexed for separate processing. In step 605, the audio stream is segmented into five second portions. The size of the portions may vary depending on the type of content being evaluated. For example, the audio stream may be segmented into 10 second portions, 2 second portions, 8 second portions, 30 second portions and the like. In step 610, the audio energy of each segmented portion of audio may be graphed. In one example, each second of audio may be represented by 4,000 data points. Accordingly, those data points may be graphed to form an audio energy graph over time (e.g., decibels vs. seconds or milliseconds). Depending on the audio compression techniques employed, one second of audio may comprise fewer or more data points (e.g., 2,000 data points, 10,000 data points, 60,000 data points).

In step 615, a first audio energy curve or graph of a first audio portion may be compared to the audio energies for each of the other segmented portions to measure similarity. The similarity measure may, for example, comprise a percentage of data points matching between two curves. The comparison may provide some flexibility in determining a match between two data points. For example, if two data points are within 5 dB of one another, the data points may be treated as a match. Flexibility may also be defined as a percentage of audio energy. In step 620, a system may identify audio portions having audio energy profiles matching the first audio energy profile based on the measure of similarity determined in step 615. The similarity measure, in one or more arrangements, may be expressed in terms of a percentage of data points matching. Accordingly, a match between audio portions may be identified if their corresponding audio energies match according to a threshold level of times (e.g., 75%, 90%, 95%, 100%).

In step 625, the system may determine whether the number of matches meets or exceeds a threshold level. If so, the segment corresponding to the audio portion may optionally be classified as a commercial in step 630. If not, the system may determine if there is an audio portion that has not yet been evaluated for matches in step 635. If an audio portion has not yet been analyzed, the process may select the next unanalyzed segment in step 640 and return to step 615. If the audio portions have been analyzed (635: No), the process ends.

In one or more arrangements, audio duplicate detection as a basis for classifying video may include identifying a sequence of adjacent or consecutive audio segments that repeat together. For example, for an audio stream divided into 5 second segments, a duplicate detection system may determine that 3 adjacent 5-second segments (.e., 15 seconds of audio) are repeated in the same sequence in the audio stream. As one might imagine, a greater number of near-duplicates may exist for a smaller audio segment as compared to duplicates for larger or multiple consecutive audio segments. Thus, duplicate identification for smaller audio segments (e.g., a single audio segment) may result in a greater number of false positives. The identification of duplicates for multiple consecutive audio segments, however, may provide a stronger indication of a commercial, removing at least some of the false positives from consideration. In one or more arrangements, a sample size of 5-15 seconds may be used for analysis if it is assumed that a typical commercial is 30 seconds in length. Using a sample size of less than 5 seconds may result in excessive false positives while a sample size of greater than 15 seconds may reduce the chance of finding matches due to sampling noise.

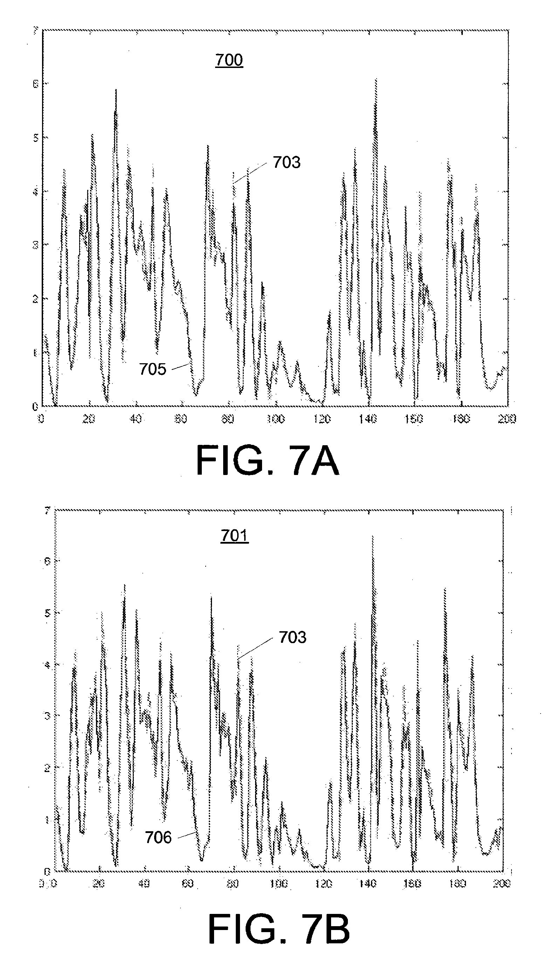

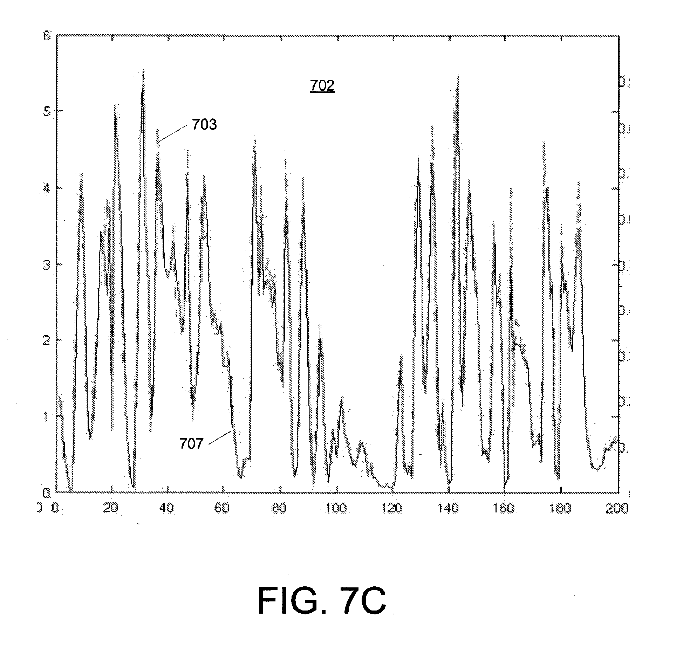

FIGS. 7A-7C illustrate three audio segments matching a query audio segment. In each of graphs 700, 701 and 702, solid curves 705, 706 and 707, respectively, represent the audio energy of the matching segment while the dashed line/curve 703 represents the query segment. As illustrated, the matching curves 705, 706 and 707 might not match exactly with the query curve 703 corresponding to the query audio segment. However, as described herein, some flexibility may be allowed for two audio energy curves to match. For example, so long as a threshold level of data points match, query segments 705, 706 and 707 are considered to match query curve 703. The threshold may include a specified number of data points or a percentage of data points that match.

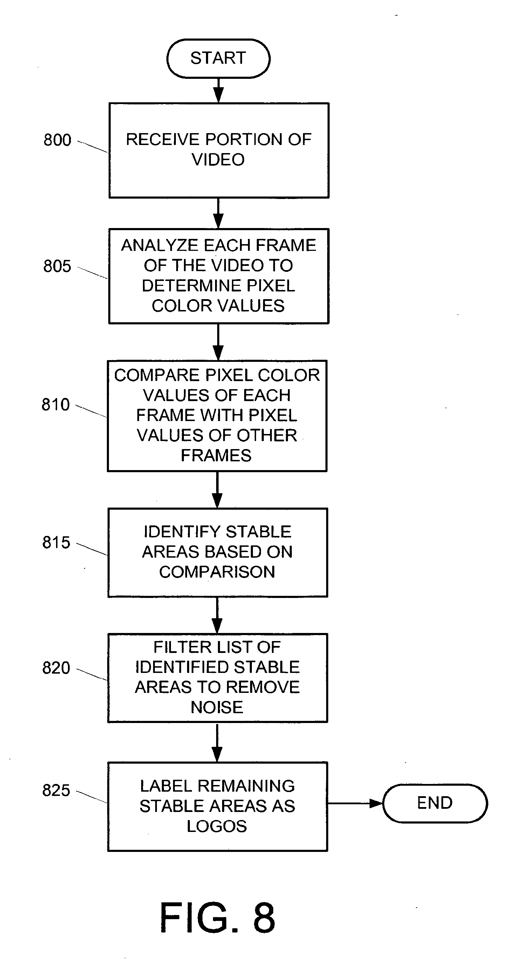

FIG. 8 illustrates a method for detecting static logos such as broadcast station logos, scoreboards and signs within a video frame. In step 800, a portion of video may be received. In step 805, each frame of the video may be analyzed to determine a color value for the pixels in the frame. In step 810, the color values for each frame in the video may be compared with the colors values for other frames. Based on the comparison, a video processing system may identify stable areas in the video in step 815. For example, stable areas may be identified in areas of a video where pixels have low color variance (i.e., little to no change in color value over time). The identification of stable areas may include the comparison of the color value for a pixel having coordinates (x, y) in a first frame with the color value for a pixel having the same coordinates (x, y) in a second frame. Because static logos generally do not change location, the logo detection algorithm can recognize static (i.e., location and appearance constant) logos.

In step 820, the identified stable areas may be filtered to remove noise. For example, if a static area occupies over half of the video frame, the static area may be removed as noise since logos tend not to occupy more than half of a video display (e.g., a thick border surrounding the screen). Similarly, if the static area is smaller than a threshold size (e.g., includes less than a threshold number of pixels), the static area may also be discarded as a false-positive. Other types of noise may include pixels that lack cohesiveness and stable areas that last too long or too short an amount of time or that appear intermittently. Upon removal of the noise, the remaining stable areas may be labeled as logos in step 825.

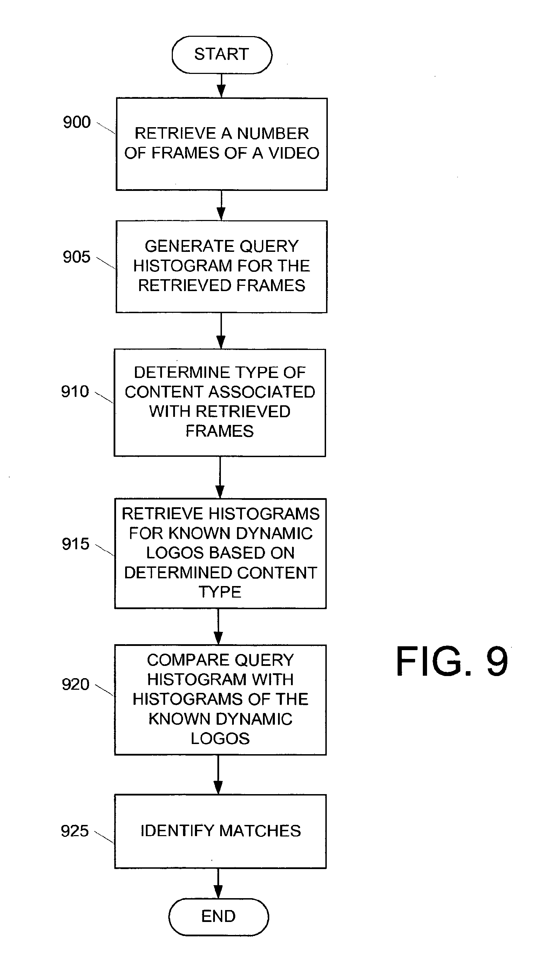

In some instances, logos may be dynamic or animated. For example, production companies or transmission companies may include an animated sequence at the end of programming for identification purposes. Detecting dynamic or animated logos provides another mechanism for determining the beginning and end of programs. FIG. 9 illustrates a method for dynamic logo detection. In step 900, for example, a video analysis system may retrieve frames of a video for a specified amount of time. In one example, a two second portion may be extracted from the video. If the video is recorded at 30 frames per second, the two second portion would correspond to 60 frames of retrieved video. In step 905, a single query histogram charting the values for a frame attribute may be generated for the 60 frames. The number of bins in the histogram may be predefined or may be determined based on the values for the attribute existing in those frames. In one example, the number and ranges for the bins may be predefined so that multiple histograms may be readily compared.

In step 910, the system may determine a type of content associated with the retrieved frames. The system may then retrieve histograms for known dynamic logos from a database in step 915 based on the determined type of content. For example, if the retrieved frames of video correspond to a sporting event, the system may retrieve known dynamic logo histograms corresponding to replays or game beginning/ending animations. In one or more arrangements, the system might always retrieve dynamic logo histograms for the channels on which the content is being transmitted. In another example, if the frames of the video correspond to a movie, the system may retrieve known dynamic logo histograms for movie studio logos. In step 920, the system may compare the query histograms with each of the predefined or known dynamic logo histograms and subsequently identify matches based thereon in step 925. For example, the number of occurrences for each histogram bin may be compared to determine if the bins match. Whether two histograms match may thus depend on the number of matching bins. The identification of a match may be flexible so that two bins may be considered as matching so long as the difference in the number of occurrences is within a predefined threshold percentage or number of one another. Similarly, a histogram may match another histogram if the histograms match a threshold number or percentage of bins (e.g., all, at least 75%, at least 90%).

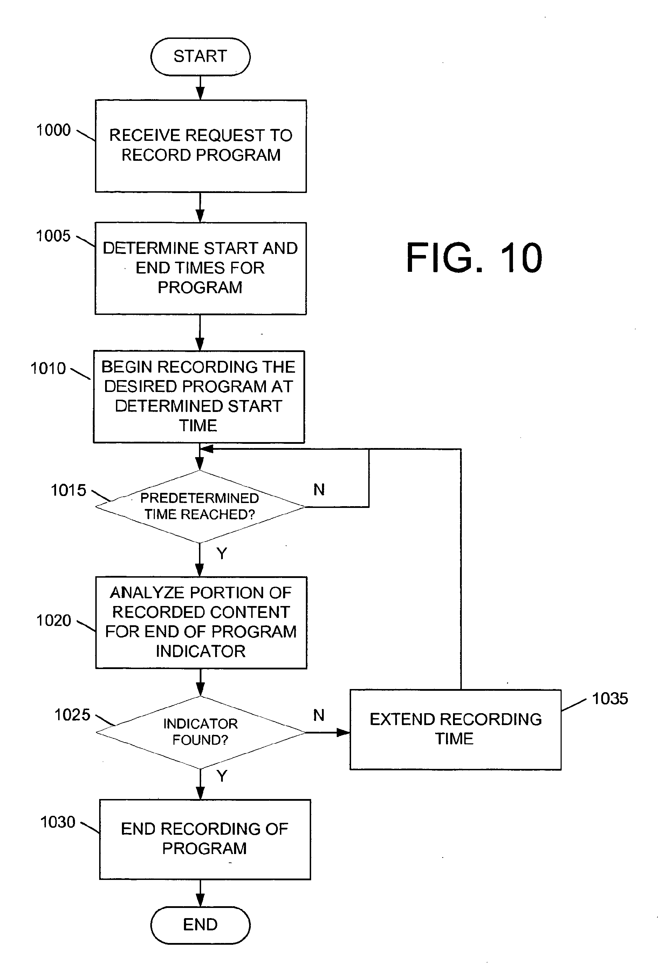

By identifying more precise start and end times for programming, a subscriber's home recording device may automatically adjust start and end times as necessary. This prevents the recording device from relying solely on predefined show times that may be inaccurate due to unforeseen or unpublished changes in the schedule. FIG. 10 illustrates a method for automatic extension of recording times. In step 1000, a system may receive a request to record a program. For example, a user may operate a user input device to identify a desired program and to select a record option in association therewith. In step 1005, the system may determine start and end times for the program based on predefined electronic service guide information. In step 1010, the system may begin recording the desired program at the determined start time. For example, the program may be recorded to a local hard disk drive of the system. In step 1015, the system may determine if a predefined time in the program has been reached. For example, the predefined time may correspond to 10 minutes before a scheduled end time. Alternatively or additionally, the system may continuously or periodically analyze portions of the recorded content throughout the entire scheduled time. If the predefined time has not been reached, the system may continue to monitor the time, returning to step 1015. If the predefined time in the program has been reached, the system may analyze a portion of recorded content for an end of program indicator in step 1020. The analyzed portion may correspond to the last recorded portion of programming. An end of program indicator may include a dynamic logo, credit roll, lengthy black frames, signature jingles and the like.

In step 1025, the system may determine whether an end of program indicator has been detected. If so, the system may end recording of the program in step 1030. If, however, the system has not detected an end of program indicator, the system may automatically extend the recording time in step 1035 for a specified amount of time or indefinitely until an end of program indicator is detected and return to step 1015. In one example, the system may automatically extend the recording time (and, consequently, the recording end time) for 5 minutes at a time until the end of program indicator is found. Accordingly, using automatic extension features, a subscriber does not need to be aware of circumstances in which a program might run longer than expected, have a delayed begin time (resulting in a later end time) and the like.

The methods and features recited herein may further be implemented through any number of computer readable media (e.g., memory) that are able to store computer readable instructions. Examples of computer readable media that may be used include RAM, ROM, EEPROM, flash memory or other memory technology, CD-ROM, DVD or other optical disk storage, magnetic cassettes, magnetic tape, magnetic storage and the like.

Additionally or alternatively, in at least some embodiments, the methods and features recited herein may be implemented through one or more integrated circuits (ICs). An integrated circuit may, for example, be a microprocessor that accesses programming instructions or other data stored in a read only memory (ROM). In some such embodiments, the ROM stores programming instructions that cause the IC to perform operations according to one or more of the methods described herein. In at least some other embodiments, one or more the methods described herein are hardwired into an IC. In other words, the IC is in such cases an application specific integrated circuit (ASIC) having gates and other logic dedicated to the calculations and other operations described herein. In still other embodiments, the IC may perform some operations based on execution of programming instructions read from ROM or RAM, with other operations hardwired into gates and other logic of the IC. Further, the IC may output image data to a display buffer.

**Claims**

1. A method comprising:

   receiving (300), at a processing device (106a-106n, 108a-108n, 118a, 118b, 200), a content stream (201) from a content source (102, 116a, 116b), the content stream having a plurality of content items (205a-205d) including at least one content item of a first type and at least one content item of a second type;
   detecting a transition (315, 320) in the content stream (201) using image analysis of one or more frames in the content stream (201);
   segmenting (325), by the processing device, the content stream into a plurality of segments (203a-203g) based on the detected transition;
   selecting (330) a segment classification algorithm, from a plurality of segment classification algorithms, based on an expected type of the first type of content item in the content stream based on content scheduling information,
   after segmenting the content stream, categorizing (335) the plurality of segments into content of the first type and content of the second type using the selected segment classification algorithm, wherein the segment classification algorithm includes an analysis (340, 345, 350) of one or more visual or audio characteristics of each of the plurality of segments, wherein when the segment classification algorithm includes analysis of one or more visual characteristics of each of the plurality of segments the image analysis used to detect the transition (315, 320) includes analyzing one or more characteristics different from the one or more visual characteristics analyzed by the selected segment classification algorithm.

2. The method of claim 1, wherein the first type corresponds to non-commercial programming and the second type corresponds to commercials.

3. The method of claim 2, wherein the image analysis (315, 320) includes detecting a transition in the content stream between two segments by determining a joint entropy between a plurality of frames in the content stream separated by the transition.

4. The method of any preceding claim, further comprising combining (355) segments of the first type into a single content item, wherein the first type includes at least one of: movies and television shows and wherein the content item is stored to a video-on-demand database (223).

5. The method of any preceding claim, wherein segmenting the content includes:

   detecting a juncture (320) in the content stream where a logo occurs or no longer appears; and
   segmenting (325) the content at the detected juncture.

6. The method of claim 5, wherein the logo identifies a source of origin.

7. The method of any preceding claim, wherein categorizing the plurality of segments comprises:

   analyzing audio (610, 620) of the plurality of segments to detect a repeating audio portion;
   determining (625) whether the number of segments having the repeating audio portion is above a threshold; and
   in response to determining that the number of segments having the repeating audio portion is above the threshold, categorizing (630) the segments having the repeating audio portion as commercials.

8. The method of any preceding claim, wherein the first type of content item corresponds to a first segment classification algorithm and the second type of content item corresponds to a second segment classification algorithm different from the first segment classification algorithm.

9. The method of any preceding claim, wherein the transition includes at least one of: a cut, a fade and a logo.

10. The method of any preceding claim, further comprising:

    dividing audio of the content stream into a plurality of segments of a predefined size;
    determining an audio energy over time for each of the audio segments;
    determining a number of matching audio energies for an audio energy of an audio segment;

determining whether the number of matches exceeds a threshold; and
in response to determining that the number of matches exceeds the threshold, classifying a video segment of the content stream corresponding to the audio energy as commercial content.

**Patentansprüche**

1. Ein Verfahren umfassend:

Empfangen (300) von einer Verarbeitungseinrichtung (106a - 106n, 108a - 108n, 118a, 118b, 200), einem Datenstrom von Inhalten (01) von einer Quelle (102, 116a, 116b) von Inhalten, wobei der Datenstrom von Inhalten eine Vielzahl von Inhaltselementen (205a-205d) mit mindestens einem Inhaltselement aus einem ersten Typ und mindestens ein Inhaltselement eines zweiten Typs umfasst;
Detektieren eines Übergangs (315, 320) in dem Datenstrom von Inhalten (201) unter Verwendung einer Bildanalyse von einem oder mehreren Rahmen in dem Datenstrom von Inhalten (201),
Segmentieren (325) durch die Verarbeitungsvorrichtung des Datenstrom von Inhalten in eine Vielzahl von Segmenten (203a-203g), basierend auf dem detektierten Übergang;
Auswählen (330) eines Algorithmus einer Klassifizierung von Segmenten aus einer Vielzahl von Algorithmen einer Klassifizierung von Segmenten, die auf einem erwarteten Typ des ersten Typs von Inhalten aus dem Datenstrom von Inhalten basiert, der auf Inhalten einer Planungsinformation basiert,
nach der Segmentierung des Datenstrom von Inhalten, Kategorisieren (335) der Vielzahl von Segmenten in den Inhalt des ersten Typs und von Segmenten in den Inhalt des zweiten Typs unter Verwendung des ausgewählten Algorithmus der Klassifizierung von Segmenten, wobei der Algorithmus der Klassifizierung von Segmenten eine Analyse (340, 345, 350) von einem oder mehrere visuelle oder Audioeigenschaften von jedem der Vielzahl von Segmenten enthält, wobei die Analyse des Algorithmus einer Klassifizierung von Segmenten verwendet wird, um den Übergang (315, 320) und das Analysieren einer oder mehrerer Eigenschaften, die sich von dem einen oder einer Mehrzahl von visuellen Eigenschaften aus den ausgewählten analysierten Algorithmen der Klassifizierung von Segmenten unterscheiden, zu erfassen.

2. Das Verfahren gemäß Anspruch 1, wobei der erste Typ nichtkommerziellen Programmen und die zweite Typ Werbespots entspricht.

3. Verfahren gemäß Anspruch 2, wobei die Bildanalyse (315, 320) das Detektieren eines Übergangs in dem Datenstrom von Inhalten zwischen zwei Segmenten durch Bestimmen einer gemeinsamen Entropie, zwischen einer Vielzahl von Rahmen in dem Datenstrom von Inhalten, die durch den Übergang getrennt werden, umfasst.

4. Verfahren nach einem der vorhergehenden Ansprüche, ferner umfassend das Kombinieren (355) von Segmenten des ersten Typs zu einzelnen Inhaltselementen, wobei der erste Typ Inhalte umfasst, die mindestens bestehen aus: Filme und Fernsehshows und wobei das Inhaltselement als eine Video-On-Demand gespeicherten Datenbank (223) speicherbar ist.

5. Verfahren nach einem der vorhergehenden Ansprüche, wobei die Segmentierung von Inhalten umfasst: Erfassen einer Verbindungsstelle (320) in dem Datenstrom von Inhalten in dem ein Logo auftritt oder nicht mehr angezeigt wird und Segmentieren (325) des Inhalt an dieser Verbindungsstelle.

6. Verfahren gemäß Anspruch 5, wobei das Logo eine Ursprungsquelle identifiziert.

7. Verfahren nach einem der vorhergehenden Ansprüche, wobei die Kategorisierung der Vielzahl von Segmenten umfasst:

Analyse von Audiosegmenten (610, 620) aus der Vielzahl von Segmenten, um einen sich wiederholenden Audioabschnitt zu erfassen,
Bestimmen (625), ob die Anzahl der Segmente, der sich wiederholenden Audioteil über einem Schwellenwert liegen, und
in Reaktion auf die Bestimmung, dass die Anzahl der Segmente mit einem Wiederholungsaudioteil, die über diesen Schwellenwert liegen, Kategorisieren (630) der Segmente mit diesem Wiederholungsaudioteil als Werbespots.

8. Verfahren nach einem der vorhergehenden Ansprüche, wobei der erste Typ von Inhaltselement einem ersten Algorithmus zur Klassifizierung von Segmenten entspricht und der zweite Typ von Inhaltselement einem zweiten Algorithmus zur Klassifizierung von Segmenten entspricht, und der sich von dem ersten Algorithmus zur Klassifizierung von Segmenten unterscheidet.

9. Verfahren nach einem der vorhergehenden Ansprüche, wobei der Übergang mindestens einen Schnitt zum ein Ein- oder Ausblenden und ein Logo umfasst.

**10.** Verfahren nach einem der vorhergehenden Ansprüche, ferner umfassend:

Aufteilen des Audioinhaltsstroms in eine Vielzahl von Segmenten einer vorbestimmten Größe;

Bestimmen einer Audioenergie im Laufe der Zeit für jedes der Audiosegmente;

Bestimmen einer Anzahl von zusammenpassenden Audio-Energien für eine Audioenergie eines Audiosegmentes,

Bestimmen, ob die Anzahl der Übereinstimmungen einen Schwellenwert überschreitet, und

in Reaktion auf die Bestimmung, dass die Anzahl von Übereinstimmungen den Schwellenwert übersteigt, Klassifizieren eines Videosegments des Inhaltsstroms entsprechend seiner Audioenergie als kommerziellen Inhalt.

## Revendications

**1.** Méthode comprenant les étapes consistant à :

recevoir (300), dans un dispositif de traitement (106a-106n, 108a-108n, 118a, 118b, 200), un flux de contenu (201) d'une source de contenu (102, 116a, 116b), le flux de contenu ayant une pluralité d'éléments de contenu (205a-205d) y compris au moins un élément de contenu d'un premier type et au moins un élément de contenu d'un second type ;

détecter une transition (315, 320) dans le flux de contenu (201) en utilisant l'analyse d'image d'une ou de plusieurs trames dans le flux de contenu (201) ;

faire segmenter (325) par le dispositif de traitement le flux de contenu en une pluralité de segments (203a-203g) sur la base de la transition détectée ;

sélectionner (330) un algorithme de classification de segment dans une pluralité d'algorithmes de classification de segment, sur la base d'un type attendu du premier type d'élément de contenu dans le flux de contenu sur la base des informations de programmation de contenu,

après segmentation du flux de contenu, catégoriser (335) la pluralité de segments en contenu du premier type et contenu du second type en utilisant l'algorithme de classification de segment sélectionné, dans laquelle l'algorithme de classification de segment inclut une analyse (340, 345, 350) d'une ou de plusieurs caractéristiques visuelles ou audio de chaque segment parmi la pluralité de segments, dans laquelle lorsque l'algorithme de classification de segment inclut l'analyse d'une ou de plusieurs caractéristiques visuelles de chaque segment parmi la pluralité de segments, l'analyse d'image utilisée pour détecter la transition (315, 320) inclut l'analyse d'une ou de plusieurs caractéristiques différentes de l'une ou de plusieurs caractéristiques visuelles analysées par l'algorithme de classification de segment sélectionné.

**2.** Méthode selon la revendication 1 dans laquelle le premier type correspond à une programmation autre que publicitaire et le second type correspond à des publicités.

**3.** Méthode selon la revendication 2 dans laquelle l'analyse d'image (315, 320) inclut la détection d'une transition dans le flux de contenu entre deux segments par la détermination d'une entropie conjointe entre une pluralité de trames dans le flux de contenu séparé par la transition.

**4.** Méthode selon l'une quelconque des revendications précédentes, comprenant en outre l'étape consistant à combiner (355) des segments du premier type en un élément de contenu unique, dans laquelle le premier type inclut au moins l'un des types suivants : films et spectacles télévisés et dans lequel l'élément de contenu est stocké dans une base de données de vidéo à la demande (223).

**5.** Méthode selon l'une quelconque des revendications précédentes, dans laquelle la segmentation du contenu inclut les étapes consistant à :

détecter une jonction (320) dans le flux de contenu lorsqu'un logo intervient ou n'apparaît plus ;
et
segmenter (325) le contenu au niveau de la jonction détectée.

**6.** Méthode selon la revendication 5, dans laquelle le logo identifie une source d'origine.

**7.** Méthode selon l'une quelconque des revendications précédentes, dans laquelle la catégorisation de la pluralité de segments comprend les étapes consistant à :

analyser la partie audio (610, 620) de la pluralité de segments afin de détecter une portion audio se répétant ;

déterminer (625) si le nombre de segments ayant la portion audio se répétant est au-dessus d'un seuil ; et

en réponse à l'étape consistant à déterminer que le nombre de segments ayant la portion audio se répétant est au-dessus du seuil, catégoriser (630) les segments ayant la portion audio se répétant comme étant des publicités.

**8.** Méthode selon l'une quelconque des revendications précédentes dans laquelle le premier type d'élément de contenu correspond à un premier algorithme de classification de segment et le second type d'élément de contenu correspond à un second algorithme de classification de segment différent du premier algorithme de classification de segment.

**9.** Méthode selon l'une quelconque des revendications précédentes dans laquelle la transition inclut au moins l'un des éléments suivants : une coupure, un fondu et un logo.

**10.** Méthode selon l'une quelconque des revendications précédentes, comprenant en outre les étapes consistant à :

> diviser la partie audio du flux de contenu en une pluralité de segments d'une taille prédéfinie ;
> déterminer une énergie audio dans le temps pour chacun des segments audio ;
> déterminer un nombre d'énergies audio correspondantes pour une énergie audio d'un segment audio ;
> déterminer si le nombre de correspondances dépasse un seuil ; et
> en réponse à l'étape consistant à déterminer que le nombre de correspondances dépasse le seuil, classifier un segment vidéo du flux de contenu correspondant à l'énergie audio comme contenu publicitaire.

# FIG. 1

100

102

SERVER 110n

SERVER 110a

SERVER 110x

120

118a

118b

MEDIA DISTRIBUTION NETWORK 104

WIDE AREA NETWORK 112

106a

106n

SET-TOP BOX

SET-TOP BOX

108a

108n

CONTENT PROVIDER

CONTENT PROVIDER

116b

116a

WEBSITE 114b

WEBSITE 114a

MULTIMEDIA CONTENT
STREAM    201

200

| PROCESSOR 220 | TRANSMITTER 229 |
| RAM 225 | RECEIVER 231 |
| ROM 227 | DB 223 |

| 203a | 203c | 203b | 203d | 203f | 203e | 203g |

. . .

| NEWS 205a |
| SPORTS EVENT 205b |
| COMMERCIAL A 205c |
| COMMERCIAL B 205d |

FIG. 2

# FIG. 3

START

300 — RECEIVE CONTENT STREAM INCLUDING TELEVISION SHOW AND COMMERCIALS

305 — STORE CONTENT STREAM

310 — RETRIEVE PORTION OF STORED CONTENT STREAM FOR SEGMENTATION

315 — ANALYZE FRAMES TO IDENTIFY PROGRAM BOUNDARIES USING IMAGE ANALYSIS

320 — DETECT LOGOS IN CONTENT STREAM TO IDENTIFY ADDITIONAL BOUNDARIES

325 — DIVIDE CONTENT STREAM INTO SEGMENTS ALONG BOUNDARIES

330 — SELECT CLASSIFICATION ALGORITHM

CATEGORIZE SEGMENTS INTO SHOW SEGMENTS AND COMMERCIAL SEGMENTS — 335

ANALYZE ENTROPY OF FRAMES — 340

AUDIO/VIDEO DUPLICATE ANALYSIS — 345

CUT RATE ANALYSIS — 350

MERGE AND STORE SEGMENTS OF SIMILAR TYPE INTO ONE CONTENT ITEM — 355

END

FIG. 4

EP 2 362 396 B1

FIG. 5A

FIG. 5B

**FIG. 6**

```
                    ( START )
                        |
                        v
600 —    EXTRACT AUDIO
         STREAM FROM
         MULTIMEDIA CONTENT
         STREAM
                        |
                        v
605 —    SEGMENT AUDIO INTO
         PORTIONS OF A
         SPECIFIED SIZE
                        |
                        v
610 —    GRAPH AUDIO ENERGY
         CURVE FOR EACH
         AUDIO SEGMENT
                        |
                        v
615 —    COMPARE AUDIO
         ENERGY CURVE FOR A
         SEGMENT WITH
         ENERGY CURVES OF
         ALL OTHER SEGMENTS
                        |
                        v
620 —    IDENTIFY MATCHES
         WITH THE AUDIO
         ENERGY CURVE
                        |
                        v
625 — < # OF MATCHES ≥ X >  --N-->  < MORE SEGMENTS? > 635
           |                              |        |
           Y                              Y        N
           v                              v        |
630 —    CLASSIFY AS          640 — SELECT NEXT SEGMENT
         COMMERCIAL                              |
                                              ( END )
```

FIG. 7A

FIG. 7B

# FIG. 7C

START

800 — RECEIVE PORTION OF VIDEO

805 — ANALYZE EACH FRAME OF THE VIDEO TO DETERMINE PIXEL COLOR VALUES

810 — COMPARE PIXEL COLOR VALUES OF EACH FRAME WITH PIXEL VALUES OF OTHER FRAMES

815 — IDENTIFY STABLE AREAS BASED ON COMPARISON

820 — FILTER LIST OF IDENTIFIED STABLE AREAS TO REMOVE NOISE

825 — LABEL REMAINING STABLE AREAS AS LOGOS

END

# FIG. 8

START

900 — RETRIEVE A NUMBER OF FRAMES OF A VIDEO

905 — GENERATE QUERY HISTOGRAM FOR THE RETRIEVED FRAMES

910 — DETERMINE TYPE OF CONTENT ASSOCIATED WITH RETRIEVED FRAMES

915 — RETRIEVE HISTOGRAMS FOR KNOWN DYNAMIC LOGOS BASED ON DETERMINED CONTENT TYPE

920 — COMPARE QUERY HISTOGRAM WITH HISTOGRAMS OF THE KNOWN DYNAMIC LOGOS

925 — IDENTIFY MATCHES

END

FIG. 9

START

1000 — RECEIVE REQUEST TO RECORD PROGRAM

1005 — DETERMINE START AND END TIMES FOR PROGRAM

# FIG. 10

1010 — BEGIN RECORDING THE DESIRED PROGRAM AT DETERMINED START TIME

1015 — PREDETERMINED TIME REACHED?    N

Y

1020 — ANALYZE PORTION OF RECORDED CONTENT FOR END OF PROGRAM INDICATOR

1025 — INDICATOR FOUND?    N — EXTEND RECORDING TIME — 1035

Y

1030 — END RECORDING OF PROGRAM

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 02052440 A

### Non-patent literature cited in the description

- Multimedia Content Analysis - Using Both Audio and Visual Clues. **YAO WANG et al.** IEEE SIGNAL PROCESSING MAGAZINE. IEEE SERVICE CENTER, 01 November 2000, vol. 17, 12-36

- **DAILIANAS A et al.** COMPARISON OF AUTOMATIC VIDEO SEGMENTATION ALGORITHMS. *PROCEEDINGS OF SPIE,* 01 January 1976, vol. 2615, ISSN 0277-786X, 2-16